# EUROPEAN PATENT APPLICATION

(11) **EP 2 535 580 A1**
(43) Date of publication of application: **19.12.2012**
(21) Application number: 11739907.1
(22) Date of filing: 07.02.2011
(51) Int. Cl.: F03D 11/00, F03D 11/04

(54) **WIND-POWERED ELECTRICAL GENERATOR**

(30) Priority: 08.02.2010 JP 2010025380
(71) Applicant: Mitsubishi Heavy Industries, Ltd., Tokyo 108-8215 (JP)
(72) Inventor: SATO, Shinsuke, Tokyo 108-8215 (JP); HIRAI, Shigeto, Tokyo 108-8215 (JP); NAKAMURA, Taisuke, Tokyo 108-8215 (JP); MATSUO, Takeshi, Tokyo 108-8215 (JP); GOTOU, Chuuhachi, Tokyo 108-8215 (JP); OKANO, Yasushi, Tokyo 108-8215 (JP)
(74) Representative: Intès, Didier Gérard André
(86) International application number: PCT/JP2011/052490
(87) International publication number: WO 2011/096560

(57) **Abstract**

A wind turbine generator having a large opening area for air intake and exhaust while maintaining tower strength and having a sufficient cooling performance is provided. In the wind turbine generator, a rotor head rotating when receiving wind power with wind turbine blades drives a generating machine provide inside a nacelle to generate electric power. The nacelle is provided on an upper end portion of a tower (2) standing upright on a foundation. Outer air is introduced into the tower from a tower opening. (20) provided on a surface of the tower (2) to cool an inner space of the tower. The wind turbine generator includes a recessed cylindrical portion (21) extending from the tower opening (20) toward the inner side of the tower. Air can pass through pressure loss elements provided on a part or all of a surface making up the cylindrical portion (21), and an effective opening area where the pressure loss elements are provided is larger than an actual opening area of the tower opening (20).

## Description

### Technical Field}

The present invention relates to a wind turbine generator that introduces outer air and cools heat produced by device losses during operation. More particularly, the present invention relates to a wind turbine generator including a tower with an opening for introducing outer air.

### {Background Art}

A wind turbine generator (hereinafter also referred to as "wind turbine") is a device that generates electric power with a generating machine that is driven in such a manner that a rotor head equipped with wind turbine blades rotates when receiving wind power and increases the rotational speed using a gear box.
The rotor head is attached to an end portion of a yaw rotatable nacelle provided on a wind turbine tower (hereinafter simply referred to as "tower"), and is supported to be rotatable about a rotation axis extending substantially in the horizontal lateral direction.

In general, the wind turbine tower often employs a steel monopole type that uses a cylindrical shell. In such a steel-monopole-type tower, a base plate provided on a lower end portion of a tower shell is fixed on a foundation of a reinforced concrete by an anchor bolt.
Since such a wind turbine generator includes electric devices such as a converter, the electric devices and the like serving as heating elements need to be cooled for continuing stable operation. In other worlds, heat is produced by device losses during the operation of the wind turbine generator and thus the devices need to be appropriately cooled for suppressing the temperature increase within a predetermined value.

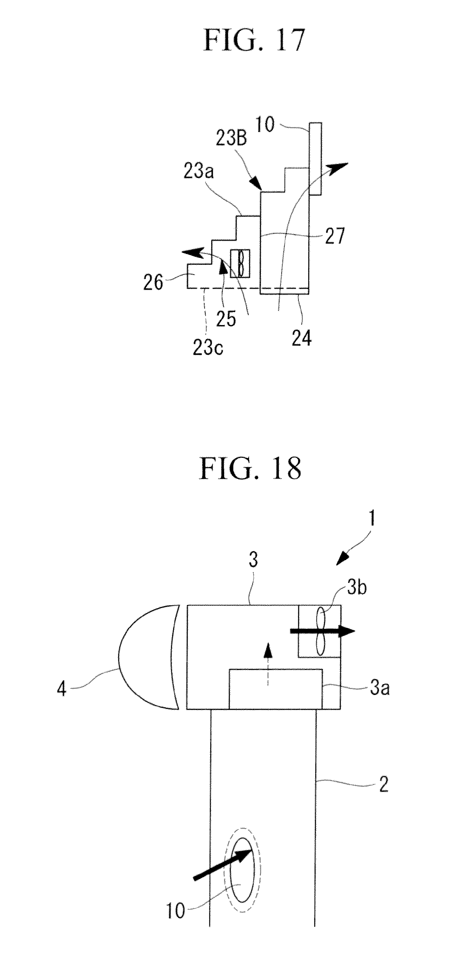

Fig. 18 is a conceptual diagram showing a cooling structure for introducing outer air from a tower opening and cooling heat generated due to device losses of a wind turbine generator using the outer air according to a conventional example. In Fig. 18, the reference numeral 1 denotes the wind turbine generator, the reference numeral 2 denotes a tower, the reference numeral 3 denotes a nacelle, the reference numeral 4 denotes a rotor head, and the reference numeral 10 denotes a door opening. Arrows in Fig. 18 show the flow of the outer air.
In this case, an in-nacelle device 3a disposed in the nacelle 3 is an electric device to be cooled. A ventilating fan 3b is operated to introduce outer air into the inside of the tower 2 from an inlet (not shown) provide at an appropriate portion of the door opening 10, and the outer air passes through the inside of the nacelle 3 for ventilation and cooling. The outer air that cools the in-nacelle device 3a is discharged to the outside through the ventilating fan 3b.

The in-nacelle device 3a can be directly cooled by outer air circulating in the nacelle 3. Alternatively, the in-nacelle device 3a may be indirectly cooled by a cooling medium (water, oil, or the like) which circulates in the in-nacelle device 3a and a heat exchanger for cooling and the heat of which is absorbed by outer air in the heat exchanger for cooling. The in-nacelle device 3a may be cooled using both direct and indirect cooling.

To cool heating elements such as electric devices, another conventional wind turbine generator includes a heat exchanger provided outside of a tower as a cooling device that circulates a cooling medium and cools the heating elements. In this case, the cooling medium introduced to the heat exchanger provided outside of the tower is cooled by heat exchange with outer air passing through the heat exchanger (for example, see Patent Literature 1).

### {Citation List}

### {Patent Literature}

{PTL 1} U.S. Patent No. 7168251

### {Summary of Invention}

### {Technical Problem}

When the electric device is cooled by introducing the outer air into the tower in the wind turbine generator, it is required that an opening serving as an intake/exhaust port is provided on the surface of the tower to introduce the outer air into the tower. At such an intake/exhaust port, pressure loss elements such as a louver, a filter, a desalinating filter are provided to remove liquid drops, dust, salts, and the like in the air.

When the opening is downsized to ensure the tower strength, the flow rate of outer air passing through the opening is increased. Accordingly, the pressure loss (proportional to the square of the flow rate) of the pressure loss elements is increased. Thus, it becomes difficult to ensure a sufficient amount of ventilating air for natural ventilation, and consequently, the temperature inside the tower is increased.
When ventilation is performed forcibly by a ventilating fan, the power of the ventilating fan is increased because of the large pressure loss. Consequently, the power in the plant is unfavorably consumed.

The cooling and the tower strength are in a trade-off relationship relative to the opening area of the tower, but the amount of increase in the tower diameter is extremely small relative to the amount of increase in the wind turbine output power. The device loss (the amount of generated heat) is increased with the enlargement of the wind turbine (output power increase) in recent years, and thus the required flow rate of cooling air is increased. Since the tower diameter cannot be increased largely, it is difficult to ensure a large opening area of the intake/exhaust port while ensuring the tower strength. Thus, the trade-off relationship between the cooling and the tower strength is more severe as the wind turbine generator is enlarged.

An object of the present invention, which has been made under the aforementioned circumstances, is to provide a wind turbine generator that ensures a large opening area of an intake/exhaust port while ensuring tower strength and has a sufficient cooling performance.

### {Solution to Problem}

In order to solve the aforementioned problems, the present invention provides the following solutions.
According to the invention, there is provided a wind turbine generator that generates electric power by a generating machine driven by a rotor head rotating when receiving wind power using wind turbine blades, the generating machine being provided inside a nacelle, the nacelle being provided on an upper end portion of a tower standing upright on a foundation, the wind turbine generator cooling an inner space by introducing outer air into an inside of the tower from a tower opening provided on a surface of the tower, the wind turbine generator including a recessed portion extending from the tower opening toward an inner side of the tower or a projecting portion extending from the tower opening toward an outer side of the tower, in which air is passable through pressure loss elements provided on a part or all of a surface making up the recessed portion or the projecting portion, and an effective opening area where the pressure loss elements are provided is larger than an actual opening area of the tower opening.

The wind turbine generator includes the recessed portion extending from the tower opening toward the inner side of the tower or the projecting portion extending from the tower opening toward the outer side of the tower. Further, air can pass through the pressure loss elements provided on a part or all of the surface making up the recessed portion or the projecting portion, and the effective opening area where the pressure loss elements are provided is larger than the actual opening area of the tower opening. Thus, the tower strength can be maintained while minimizing the area of the tower opening, and the flow rate of outer air passing through the pressure loss elements provided on the large effective opening area can be reduced. Especially, in the recessed portion extending from the tower opening toward the inner side of the tower, the pressure loss elements are provided at a portion that is recessed from the outer surface of the tower. Thus, foreign substances such as dust and rain water do not easily reach the pressure loss elements.
The recessed portion or the projecting portion according to the present invention may be a cylindrical portion having a circular cross-sectional surface or a rectangular cross-sectional surface, a hollow case, or a stepped case.

In the invention, it is preferable that the tower opening is provided on at least a part of a door opening of a door for going in and out of the tower. Thus, the effective opening area larger than the actual opening area of the tower opening can be easily formed by effectively using the door opening that is always necessary in the tower.
In the invention, it is also desirable that the recessed portion or the projecting portion includes an openable and closable port provided at any position of a component surface thereof.

In the invention, it is preferable that the recessed portion or the projecting portion is gradually widened from the tower opening. Thus, the large effective opening area can be easily secured.

It is preferable that the recessed portion is inclined upward from the tower opening toward a tower axial center direction. Thus, foreign substances such as dust and rain water do not easily reach the pressure loss elements.

In the invention, it is preferable that a cross-sectional shape of the recessed portion or the projecting portion includes a straight portion. Thus, the connection and installation of a duct and the like can be facilitated. The preferred shape including the straight portion may be a square shape, rectangular shape, substantially elliptical shape, or the like. Especially, when its opening is vertically elongated, the tower strength can be easily maintained as compared when it has a circular shape or square shape.

In the invention, it is preferable that the projecting portion is an outer case projecting from a periphery of the door opening and the effective opening area is provided on an exposed surface of the outer case. Thus, the large effective opening area can be easily secured. Also, stairsteps continuing to the door opening serving as an inlet of the tower may be formed inside the outer case.

In the invention, the recessed portion or the projecting portion may be a stepped outer case projecting from a lower end portion side of the door opening, the lower end portion side of the door opening is the actual opening area, and the effective opening area may be provided on all or a part of a component surface of the stepped outer case.

In the invention, a space may be formed between a bottom surface of the outer case or the stepped outer case and a ground surface, and the effective opening area may be provided on the bottom surface. Thus, the intrusion of foreign substances such as dust and rain water can be prevented.
In the invention, a device installation space including an independent outer air circulation path may be formed inside the outer case or the stepped outer case.

In the invention, it is desirable that a filter of a low pressure loss is attached to the large effective opening area.
Further, in the invention, a fan for sucking the outer air may be provided in a partition disposed in the tower on a downstream side of the effective opening area. Thus, the outer air can be sucked in while preventing short-circuit at a port of the fan.
Further, in the invention, a fan for sucking the outer air may be provided on an inner side of a surface forming the effective opening area. Thus, the outer air can be actively sucked in.

In the invention, a bypass flow path of the outer air may be provided to be branched from a surface of the effective opening area and communicated with the air, and a heat exchanger for cooling a cooling medium by heat exchange with the outer air may be provided in the bypass flow path. Thus, the outer air can be introduced without short-circuit of exhaust heat from the heat exchanger into the tower.
In this case, it is preferable that a sound absorbing material is attached in the bypass flow path. Thus, the operating noise of the heat exchanger fan generated during operation of the heat exchanger can be reduced.
An outlet side of the bypass flow path may extend to be opened toward a ground surface. Thus, the operating noise of the heat exchanger fan generated during the operation of the heat exchanger can be prevented from spreading around.

### {Advantageous Effects of Invention}

In the wind turbine generator according to the present invention, the effective opening area, which is larger than the actual opening area of the tower opening provided on the surface of the tower, can be secured. Thus, the large opening area for air intake and exhaust can be secured while maintaining the tower strength.

### {Brief Description of Drawings}

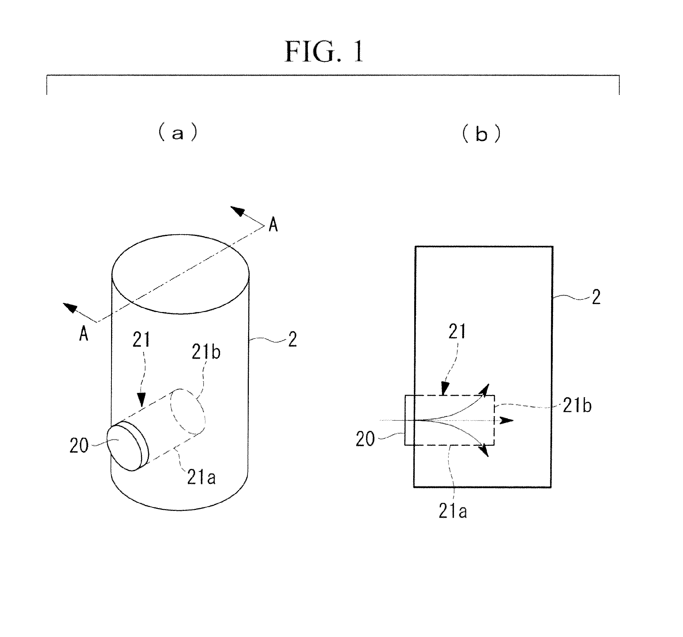

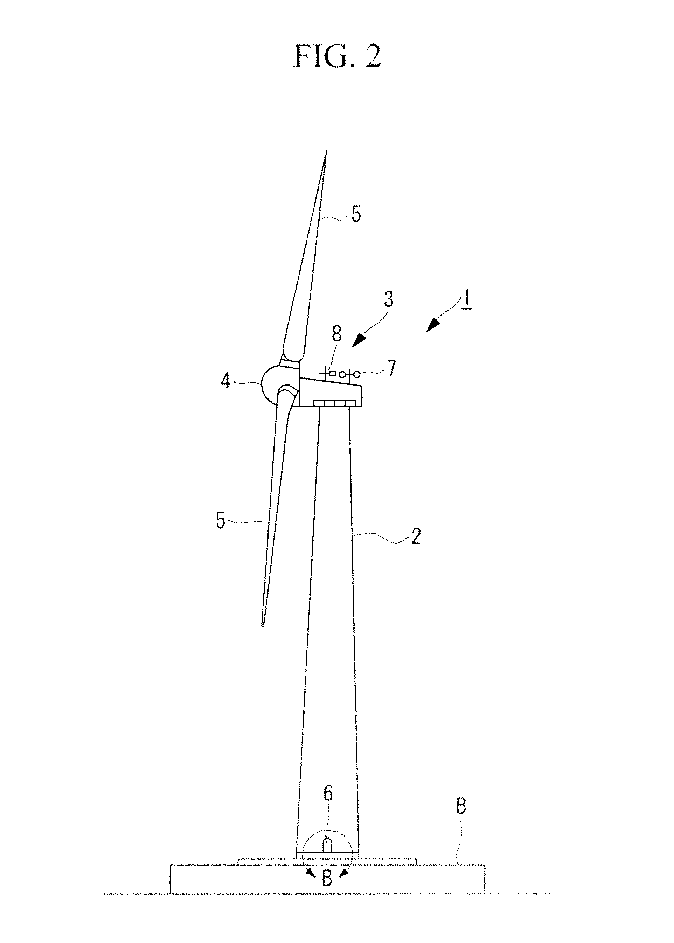

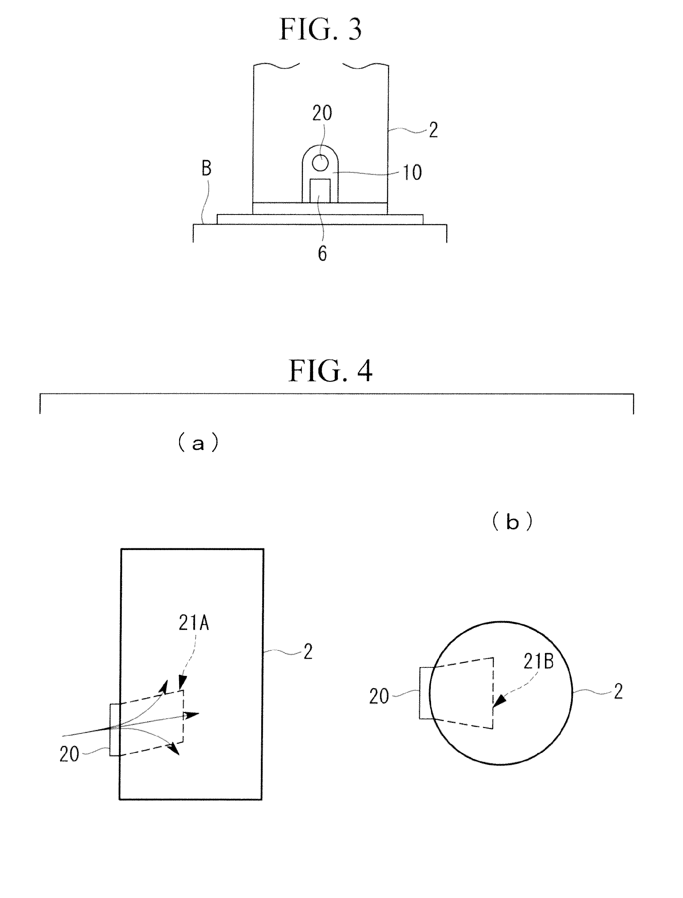

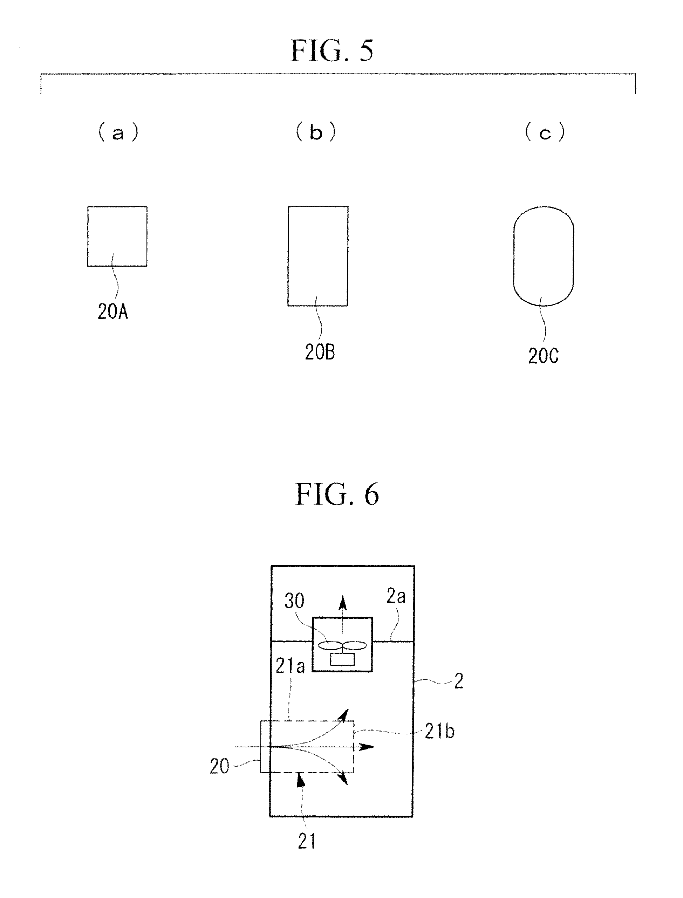

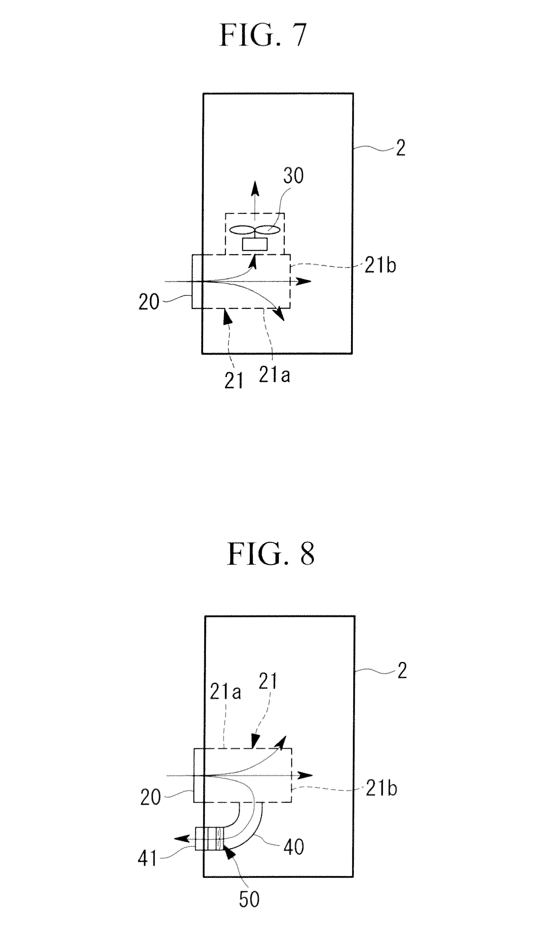

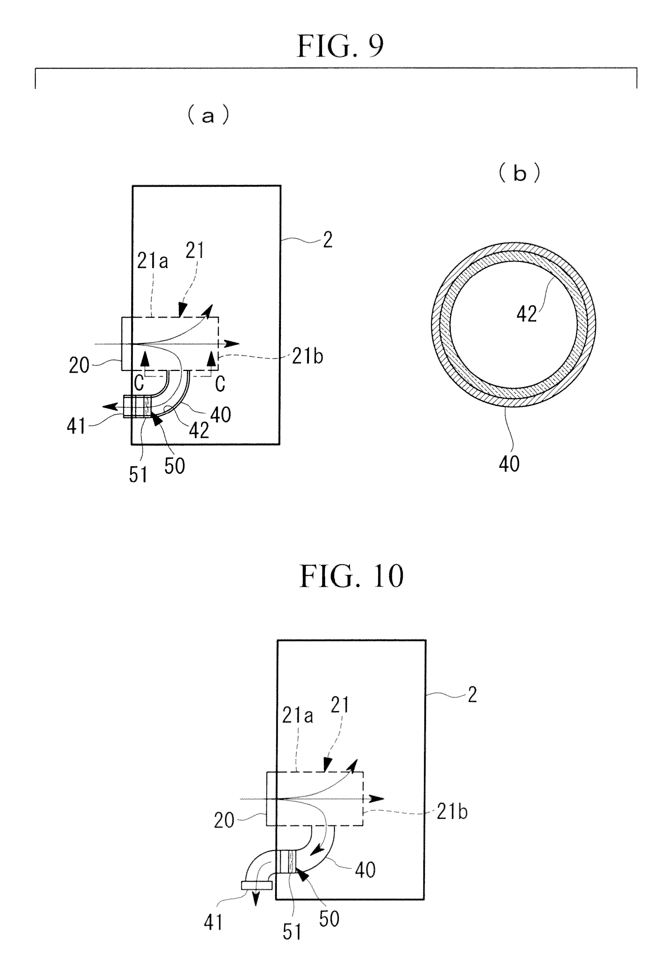

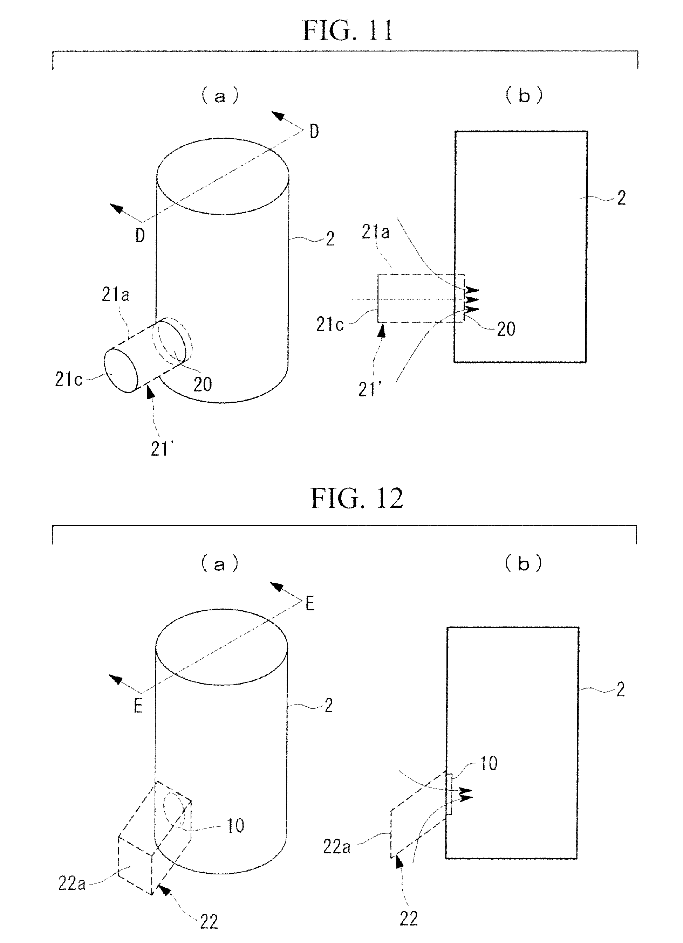

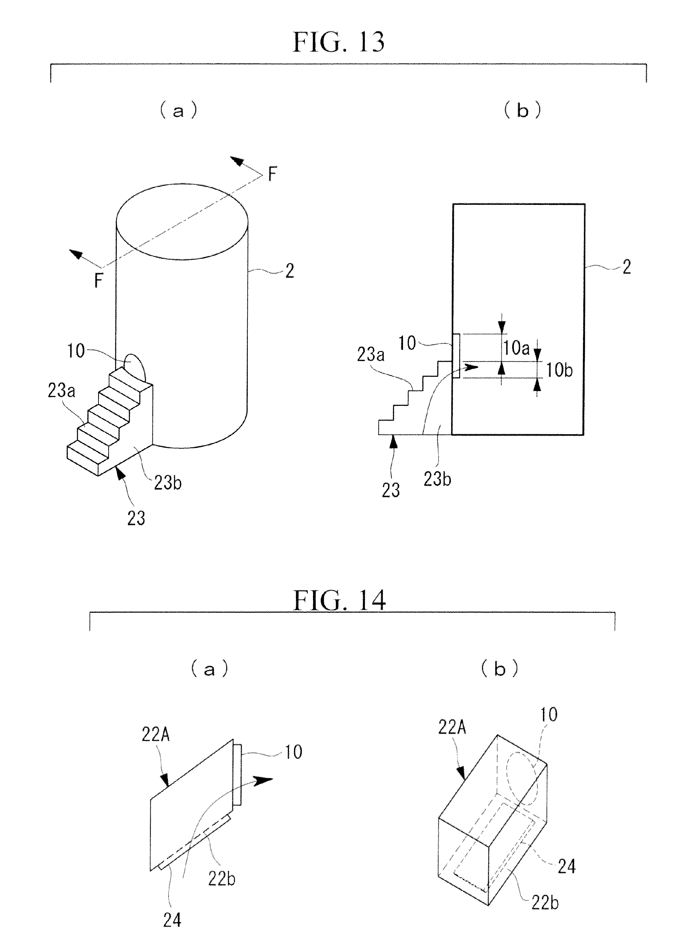

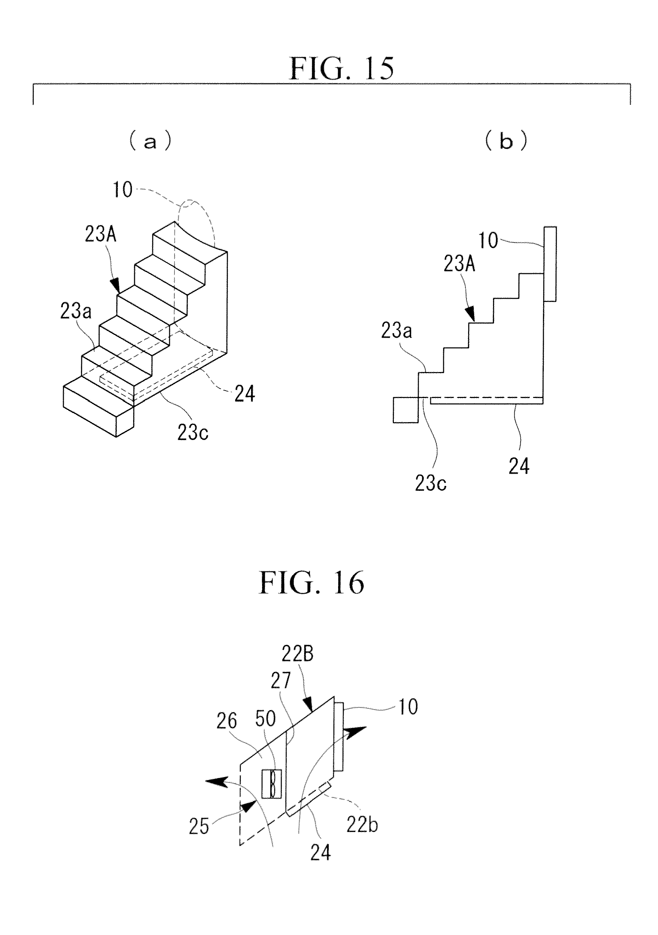

{Fig. 1} Fig. 1 shows a wind turbine generator according to a first embodiment of the present invention. Fig. 1 (a) is a perspective view showing an actual opening area and an effective opening area of a tower opening provided on a tower surface, and Fig. 1(b) is a cross-sectional view taken along the line A-A of Fig. 1(a).
{Fig. 2} Fig. 2 is a side view showing an outline of the wind turbine generator.
{Fig. 3} Fig. 3 is an enlarged view of a B portion shown in Fig. 2, which illustrates an installation example of the tower opening.
{Fig. 4} Fig. 4 shows modifications of the actual opening area and the effective opening area shown in Fig. 1. Fig. 4(a) is a longitudinal cross-sectional view showing a first modification, and Fig. 4(b) is a horizontal cross-sectional view showing a second modification.
{Fig. 5} Fig. 5 is an elevation view showing examples of a shape of the actual opening area of the tower opening provided on the tower surface. Fig. 5(a) shows a square shape, Fig. 5(b) shows a vertically-elongated rectangle shape, and Fig. 5(c) shows a substantially elliptical shape.
{Fig. 6} Fig. 6 is a longitudinal cross-sectional view showing a structural example of an actual opening area and an effective opening area in a wind turbine generator provided with a ventilating fan according to a second embodiment of the present invention.
{Fig. 7} Fig. 7 is a longitudinal cross-sectional view showing a first modification of the structural example shown in Fig. 6.
{Fig. 8} Fig. 8 is a longitudinal cross-sectional view showing a structural example of a wind turbine generator provided with a heat exchanger according to a third embodiment of the present invention.
{Fig. 9} Fig. 9 is a longitudinal cross-sectional view showing a first modification of the structural example shown in Fig. 8. Fig. 9(a) is a longitudinal cross-sectional view, and Fig. 9(b) is a cross-sectional view taken along the line C-C of Fig. 9(a).
{Fig. 10} Fig. 10 is a longitudinal cross-sectional view showing a second modification of the structural example show in Fig. 8.
{Fig. 11} Fig. 11 shows a wind turbine generator according to a fourth embodiment of the present invention. Fig. 11(a) is a perspective view showing an actual opening area and an effective opening area of a tower opening provided on a tower surface, and Fig. 11(b) is a cross-sectional view taken along the line D-D of Fig. 11(a).
{Fig. 12} Fig. 12 shows a first modification of the fourth embodiment shown in Fig. 11. Fig. 12(a) is a perspective view showing an actual opening area and an effective opening area, and Fig. 12(b) is a cross-sectional view taken along the line E-E of Fig. 12(a).
{Fig. 13} Fig. 13 shows a second modification of the fourth embodiment shown in Fig. 11. Fig. 13(a) is a perspective view showing an actual opening area and an effective opening area, and Fig. 12(b) is a cross-sectional view taken along the line F-F of Fig. 13(a).
{Fig. 14} Fig. 14 shows a third modification of the fourth embodiment shown in Fig. 11. Fig. 14(a) is a side view showing an actual opening area and an effective opening area, and Fig. 14(b) is a perspective view of Fig. 14(a).
{Fig. 15} Fig. 15 shows a fourth modification of the fourth embodiment shown in Fig. 11. Fig. 15(a) is a perspective view showing an actual opening area and an effective opening area, and Fig. 15(b) is a side view of Fig. 15(a).
{Fig. 16} Fig. 16 is a side view showing a fifth modification of the fourth embodiment shown in Fig. 11.
{Fig. 17} Fig. 17 is a side view showing a sixth modification of the fourth embodiment shown in Fig. 11.
{Fig. 18} Fig. 18 is a conceptual diagram showing a cooling structure for introducing outer air from a tower opening and cooling heat generated due to device loss by the outer air in a conventional wind turbine generator.

### {Description of Embodiments}

A wind turbine generator according to embodiments of the present invention will be explained below with reference to the accompanying drawings.
A wind turbine generator 1 shown in Fig. 2 includes a wind turbine tower (hereinafter referred to as "tower") 2 standing upright on a foundation B, a nacelle 3 disposed on the upper end of the tower 2, and a rotor head 4 provided at a front end side of the nacelle 3 and supported to be rotatable about a rotation axis extending substantially in the horizontally lateral direction.

Multiple (e.g., three) wind turbine blades 5 are attached to the rotor head 4 so as to extend radially around the rotation axis thereof. Thus, the power of wind striking the wind turbine blades 5 in the rotation-axis direction of the rotor head 4 is converted to power that rotates the rotor head 4 about the rotation axis.
A door 6 for going in and out of the tower is provided around a lower end portion of the tower 2.
An anemometer 7 that measures an ambient wind speed value and an anemoscope 8 that measures a wind direction are disposed at an appropriate position (such as an upper portion) of the outer peripheral surface of the nacelle 3.

In the wind turbine generator 1, the rotor head 4 rotating about the substantially horizontal rotation axis when receiving the wind power on the wind turbine blades 5 drives a generating machine (not shown) disposed inside of the nacelle 3 to generate electric power, and the nacelle 3 is disposed on the upper end portion of the tower 2 standing upright on the reinforced concrete foundation B so as to be yaw rotatable.
The tower 2, which employs a steel monopole type, is a cylindrical tower connected to flanges (not shown) of a plurality of divided tower sections to have a necessary length (height).

### <First Embodiment>

The wind turbine generator 1, as shown in Fig. 1 for example, introduces outer air into the tower through a tower opening 20 provided on the surface of the tower 2 and cools internal air of which a temperature is increased due to heat generated by device losses. For example, the heat generated by the device losses in this case includes heat generated by electric devices such as a converter and rotary devices such as a gear box during operation. In general, these devices generating the heat are disposed inside the tower 2 and the nacelle 3.

In the embodiment, for cooling the heat generated due to the device losses as described above, a cylindrical portion 21 extending from the tower opening 20 toward the inside of the tower is formed as a recessed portion. A part or all of a surface making up the cylindrical portion 21 is defined as an effective opening area Se for installing pressure loss elements. The effective opening area Se can be ventilated via the installed pressure loss elements, and is larger than an actual opening area S of the tower opening 20 (Se > S). In other words, in the first embodiment, the cylindrical portion 21 is formed to be recessed toward the inside of the tower from the tower opening 20 so that the peripheral area serving as the effective opening area Se is larger than the actual opening area S (Se > S). All or a part of a peripheral surface 21a and a tower inner end surface 21b making up the cylindrical portion 21 is used as the effective opening area Se. Incidentally, a portion shown by a dashed line in the cylindrical portion 21 in Fig. 1 is an area where outer air can be delivered due to the installation of the pressure loss elements.

More specifically, the cylindrical portion 21 shown in Fig. 1 has a cylindrical shape and extends toward the inside of the tower from the tower opening 20 opened on the outer surface of the tower 2. Although the cylindrical portion 21 has the cylindrical shape extending toward the axial center direction of the tower 2 in the structural example in Fig. 1, the cylindrical cross-sectional shape and the extending direction are not limited thereto.
The cylindrical portion 21 is formed by combining skeleton members (not shown) in a reticular pattern, and its peripheral surface and both end surfaces are opened. All or a part of the peripheral surface 21a and the tower inner end surface 21b of the opening of the cylindrical portion 21 formed in this way, except for the cylindrical end surface outside the tower (tower outer end surface) serving as the tower opening 20, can be used as the actual opening area Se, and used for installing the pressure loss elements such as a louver, filter, and desalinating filter. Incidentally, the pressure loss elements are easily fixed and supported by using the aforementioned skeleton members.

Consequently, the area of the tower outer end surface of the cylindrical portion 21, which substantially corresponds to the opening area of the tower opening 20, is the actual opening area S. Thus, the effective opening area Se in this case is larger than the actual opening area S by the area of the substantially peripheral surface 21a. In the structural example shown in Fig. 1, the area of the tower inner end surface 21b is included in the actual opening area Se. However, when the area of the tower inner end surface 21b cannot be used as the actual opening area Se, an area obtained by subtracting the actual opening area S from the area of the peripheral surface 21a is the effective opening area Se. The axial direction length and diameter of the peripheral surface 21a of the cylindrical portion 21 can be changed to appropriately adjust the area.
To be exact, the effective opening area Se of the cylindrical portion 21 is reduced by the skeleton members. However, the area closed by the skeleton members is generally sufficiently small as compared to the area of the peripheral surface 21a.

The tower opening 20 and the cylindrical portion 21 are disposed at appropriate positions of the tower 2. For example, they may be provided by using a door opening 10 for installing the door 6 as shown in Fig. 3. The door opening 10 is always provided on the tower 2 in general, because the door 6 for going in and out of the tower 2 for the purpose of maintenance or the like is necessary. Accordingly, the effective opening area Se, which is larger than the actual opening area S of the tower opening 20, can be easily formed by effectively using at least a part of the door opening 10. In the structural example shown in Fig. 3, the door opening 10 has a vertically elongated substantially elliptical shape, and the tower opening 20 is disposed by using a substantially semi-elliptical space above, the door 6.
The door 6 for going in and out of the tower 2 can be disposed on a component surface making up the cylindrical portion 21 which is a recessed portion extending from the tower opening 20 toward the inner side of the tower. The openable and closable door 6 may be provided at any of the component surfaces.

As described above, in the wind turbine generator 1 according to the first embodiment, the cylindrical portion 21 which is the recessed portion extending from the tower opening 20 toward the inner side of the tower is formed, and the effective opening area Se for installing the pressure loss elements which is larger than the actual opening area S of the tower opening 20 is secured by using the component surface of the cylindrical portion 21. Thus, the tower strength can be maintained while minimizing the area of the tower opening 20, and the flow rate of outer air passing and flowing through the pressure loss elements provided on the large effective opening area Se can be reduced. Since the portion where the pressure loss elements are installed is recessed to the inner side from the outer surface of the tower 2 in the cylindrical portion 21 that is recessed from the tower opening 20, foreign substances such as dust and rain water do not easily reach the pressure loss elements.

The actual opening area S and the effective opening area Se according to the first embodiment may be a cylindrical portion 21A according to a first modification as shown in Fig. 4(a) or a cylindrical portion 21B according to a second modification as shown in Fig. 4(b).
In the first modification shown in Fig. 4(a), the cylindrical portion 21A is formed to be a recessed portion inclined upwardly from the opening of the tower 2 toward the tower axial center direction. In other words, the cylindrical portion 21A according to the first modification has a cylindrical shape that is recessed and inclined obliquely upward toward the inside of the tower 2 from the tower opening 20 opened on the outer surface of the tower 2.

Since the portion where the pressure loss elements are installed is recessed toward the inner side from the outer surface of the tower 2 and the cylindrical portion 21A has a surface formed to be upwardly inclined from the tower opening 20, foreign substances do not easily reach the pressure loss elements.

In the second modification shown in Fig. 4(b), the cylindrical portion 21B is formed to be a recessed portion widened from the tower opening 20 of the tower 2 toward the tower axial center direction. Thus, a large peripheral area can be secured inside of the tower 2 as compared with the cylindrical shape, and therefore a large effective opening area Se can be easily secured.
Although the cylindrical portion 21B preferably has a truncated cone shape of which a diameter is expanded toward the inner side of the tower in this case, the cylindrical portion 21B may be widened only in the horizontal direction or in the vertical direction.

It is desirable that the cross-sectional shape of the cylindrical portion 21 includes a straight portion. In other words, the tower opening. 20 may have a circular shape corresponding to the cylindrical shape of the cylindrical portion 21, but it is preferable that the tower opening 20 has a straight portion. More specifically, the tower opening 20, which provides the actual opening area, may have a square shape 20A, a rectangle shape 20B, a substantially elliptical shape 20C or the like as shown in Fig. 5 (a) to Fig. 5(c). The cylindrical portion with the tower opening having such a shape is formed as a recessed portion having the same cross-sectional shape as the tower opening.
When the tower opening that provides the actual opening area includes the straight portion, a general duct and the like forming the cylindrical portion can be easily installed. Especially, when the tower opening 20 has a vertically elongated shape such as the rectangle shape 20B or the substantially elliptical shape 20C, a ratio of an opening diameter relative to a tower diameter is reduced due to the adjustment of the aspect ratio, as compared to when the tower opening 20 has a circular or square shape having the same area. Thus, factors for reducing the tower strength are reduced, and therefore the tower strength can be effectively maintained.

### <Second Embodiment>

The wind turbine generator 1 according to a second embodiment of the present invention will be explained below with reference to Fig. 6. Incidentally, the corresponding parts in the aforementioned embodiment are designated by the same reference numerals, and a detailed explanation thereof is omitted.
In the second embodiment, a partition member 2a is provided inside the tower 2 on the downstream side of the effective opening area Se to vertically partition the tower 2. A fan 30 for sucking outer air is disposed on the partition member 2a. When the fan 30 is operated, the outer air is sucked through the tower opening 20 and passes through the pressure loss members of the cylindrical portion 21. Then, the outer air passes through the fan 30 and the inside of the tower 2 to be supplied into the nacelle 3.

Since a flow path of the outer air delivered to the nacelle 3 through the tower 2 is limited to be through the fan 30 due to the partition member 2a, a short-circuit of the flow of the outer air can be prevented at a port of the fan 30. Thus, the outer air can be effectively sucked in through the tower opening 20 and therefore the cooling and ventilation can be reliably performed by the outer air.

For example, as in a first modification shown in Fig. 7, the fan 30 for sucking the outer air may be disposed at the inner side (the side close to the space of the tower 2) of the surface forming the effective opening area Se to actively suck the outer air. In other words, since the fan 30 is directly disposed at the inner side (the side close to the nacelle 3) of the tower 2 relative to the peripheral surface 21a of the cylindrical portion 21, the partition member 2a does not need to be additionally provided.

### <Third Embodiment>

The wind turbine generator 1 according to a third embodiment of the present invention will be explained below with reference to Fig. 8. Incidentally, the corresponding parts in the aforementioned embodiments are designated by the same reference numerals, and a detailed explanation thereof is omitted.
In the third embodiment, a bypass flow path 40 that is branched from the surface of the effective opening area Se to be communicated with the air is provided. A heat exchanger 50 for cooling a cooling medium by heat exchange with the outer air is provided within the bypass flow path 40. In other words, the bypass flow path 40 is formed to be branched from the peripheral surface 21a of the cylindrical portion 21 and communicated with the outer air, and the heat exchanger 50 absorbs the heat of the cooling medium to cool the cooling medium within the bypass flow path 40. Incidentally, pressure loss elements are not necessary at an inlet of the bypass flow path 40 that is branched from the peripheral surface 21a of the cylindrical portion 21 to be communicated with the outer air.

The heat exchanger 50 cools the cooling medium such as oil and water circulating through a device to be cooled by using the outer air. In other words, a part of the outer air of low temperature, which is introduced from the tower opening 20 into the cylindrical portion 21, is delivered into the bypass flow path 40. When such outer air passes through the heat exchanger 50, the heat of the cooling medium is absorbed. Consequently, the heat of the cooling medium, a temperature of which is increased by cooling the device to be cooled, is absorbed by the outer air. Then, the temperature of the cooling medium is reduced, and thus the cooling medium of low temperature can be always supplied for cooling the device to be cooled.
Since the heat exchanger 50 is disposed in the bypass flow path 40, the outer air of high temperature, which is used for heat absorption in the heat exchanger 50, is flowed out into the air from a bypass outlet 41. Accordingly, the exhaust heat from the heat exchanger 50 is not short-circuited to the inside of the tower 2. The outer air of low temperature introduced from the tower opening 20 into the cylindrical portion 21, except for a part of the outer air flowed into the bypass flow path 40, is introduced into the nacelle 3 through the pressure loss elements.

Since it is not required to prevent the intrusion of foreign substances such as dust and rain water, the outer air which is not required to pass through the pressure loss elements is delivered into the heat exchanger 50 provided in the separate bypass flow path 40 branched from the flow of the outer air heading toward the nacelle 3. Thus, the pressure loss of entire outer air introduced to be used for cooing can be reduced.

In this case, it is preferable that a sound absorbing material 42 is provide inside the bypass flow path 40 as in a first modification shown in Fig. 9, for example. The sound absorbing material 42 is effectively used for reducing the operating noise of a heat exchanger fan 51 that occurs during the operation of the heat exchanger 50. Incidentally, the heat exchanger fan 51a is a fan for introducing a part of the outer air into the bypass flow path 40 from the cylindrical portion 21 and delivering it through the heat exchanger 51. The heat exchanger fan 51a is disposed adjacent to the upstream side or downstream side of the heat exchanger 51.
When the outlet side of the bypass flow path 40 extends downward and the bypass outlet 41 is opened toward the ground surface as in a second modification shown in Fig. 10, the operating noise of the heat exchanger fan 51 that occurs during the operation of the heat exchanger 50 can be prevented from spreading around.

### <Fourth Embodiment>

The wind turbine generator 1 according to a fourth embodiment of the present invention will be explained below with reference to Fig. 11. Incidentally, the corresponding parts in the aforementioned embodiment are designated by the same reference numerals, and a detailed explanation thereof is omitted.
In the fourth embodiment, the cylindrical portion 21A is a projecting portion extending from the tower opening 20 to the outer side of the tower. A part or all of the peripheral surface 21a and the tower outer end surface 21c making up the cylindrical portion 21A is used and secured as the effective opening area Se for installing the pressure loss elements which is larger than the actual opening area S of the tower opening 20. In other worlds, in the fourth embodiment, the cylindrical portion 21A is formed to project from the tower opening 20 toward the outside of the tower so that the surface forming the projecting portion serving as the effective opening area Se is larger than the actual opening area S (Se > S).

More specifically, the cylindrical portion 21A shown in Fig. 11 has a cylindrical shape projecting toward the outside of the tower from the tower opening 20 opened on the outer surface of the tower 2. Incidentally, the cylindrical cross-sectional shape or projecting direction of the cylindrical portion 21A are not specifically limited thereto.
The cylindrical portion 21A is formed by combining skeleton members (not shown) in a reticular pattern, and its peripheral surface and both end surfaces are opened. The peripheral surface 21a and the tower outer end surface 21c of the opening of the cylindrical portion 21A formed in this way, except for the cylindrical end surface close to the tower (tower-side end surface) serving as the tower opening 20, can be used as the actual opening area Se, and used for installing the pressure loss elements.

Consequently, the area of the tower side end surface of the cylindrical portion 21, which substantially corresponds to the opening area of the tower opening 20, is the actual opening area S. Thus, the effective opening area Se in this case is larger than the actual opening area S by the area of the substantially peripheral surface 21a. In the structural example shown in Fig. 11, the area of the tower outer end surface 21c is excluded from the actual opening area Se. However, when the area of the tower outer end surface 21c can be used as the actual opening area Se, the area of the peripheral surface 21a is the effective opening area Se as in the aforementioned embodiments. The axial direction length and diameter of the peripheral surface 21a of the cylindrical portion 21A can be changed to appropriately adjust the area.
The tower opening 20 and the cylindrical portion 21A may be disposed at appropriate positions of the tower 2. For example, they may be provided by using the door opening 10 for installing the door 6 as shown in Fig. 3.

As described above, in the wind turbine generator 1 according to the fourth embodiment, the cylindrical portion 21A is formed to be a projecting portion extending from the tower opening 20 toward the outer side of the tower, and a part or all of the surfaces making up the cylindrical portion 21A is secured as the effective opening area Se for installing the pressure loss elements which is larger than the actual opening area S of the tower opening 20. Thus, the tower strength can be maintained while minimizing the tower opening 20, and the flow rate of the outer air passing and flowing through the pressure loss elements provided on the large effective opening area Se can be reduced.

In a first modification of the forth embodiment as shown in Fig. 12, the cylindrical portion 21A is an outer case 22 projecting outwardly from the periphery of the door opening 10. The effective opening area Se is secured on an exposed surface of the outer case 22. In other words, the outer case 22 extends toward the outer side of the tower to surround the door opening 10. The outer case 22 has a substantially rectangular column shape, and the exposed surface is disposed to be linearly inclined from the ground surface toward the door opening 10. Accordingly, its peripheral four surfaces including a bottom surface can be used as the effective opening area Se. Thus, the larger effective opening area Se can be easily ensured as compared to the actual opening area S defined by the door opening 10.
Incidentally, it is not required that the outer case 22 is inclined linearly as shown in Fig. 12. For example, the outer case 22 may have a plurality of horizontal portions at a midway of its inclination.

In this instance, a door (not shown) is attached to an end surface 22a of the outer case 22 installed on the ground surface. The door opening 10 is always opened as a path for outer air. Stairsteps continuing to the door opening 10 serving as the inlet of the tower can be formed inside the outer case 22, i.e., in the space of the outer case 22.
Incidentally, the shape of the outer case 22 is not limited to the substantially rectangular column shape. For example, the outer case 22 may have a cylindrical shape having the same cross-sectional shape as the door opening 10.

In a second modification of the forth embodiment as shown in Fig. 13, the cylindrical portion 21A is a stepped outer case 23 projecting from the lower end portion side of the door opening 10. The actual opening area S is secured on the lower end portion side of the door opening 10 and the effective opening area Se is secured on the both side surfaces of the stepped outer case 23. In other words, the stepped outer case 23 is a hollow box member including steps (accommodation ladder) 23a on its upper surface. The pressure loss elements are installed on the both side surfaces 23b.
In this case, an upper area 10a of the door opening 10 is closed as a surface for installing a door, and a lower area 10b on the lower side of the steps 23a is always opened as a flow path for delivering outer air.

In a third modification of the fourth embodiment shown in Fig. 14, a space for delivering outer air may be formed between a bottom surface 22b of the outer case 22A and the ground surface. The effective opening area Se may be secured on the bottom surface 22b and the pressure loss element 24 may be installed thereon.
Similarly, in a fourth modification of the fourth embodiment shown in Fig. 15, a space for delivering outer air may be formed between a bottom surface 23c of the stepped outer case 23A and the ground surface. The effective opening area Se may be ensured on the bottom surface 23c and the pressure loss element 24 may be installed thereon.
By securing the effective opening area Se on the bottom surface 22b of the outer case 22A or the bottom surface 23c of the stepped outer case 23A and installing the pressure loss element 24 thereon, foreign substances such as dust or rain water do not easily reach the pressure loss element 24.

In a fifth modification shown in Fig. 16 or a sixth modification shown in Fig. 17, a device installation space 26 forming an independent outer air circulation path 25 shown by arrows in Figs. 16 and 17 may be formed in an outer case 22B or a stepped outer case 23B. For example, a heat exchanger 50 may be installed in the device installation space 26. In this case, the device installation space 26 is separated by a partition member 27 from a space for delivering outer air into the door opening 10 of the tower 2. An outlet of outer air of which a temperature is increased by heat exchange with the heat exchanger 50 is provided at an appropriate position of an end surface on the ground surface for installation, an appropriate position of the steps 23a, or the like.
Thus, the exhaust heat from the heat exchanger 50 can be prevented from flowing into the tower 2 by short-circuit.

In the aforementioned embodiments and their modifications, the large effective opening area Se can be ensured. Thus, a sufficient filtering performance can be obtained even when a filter of a low pressure loss is attached as a pressure loss element.

According to the aforementioned embodiments and their modifications, the effective opening area Se having a large area ratio relative to the actual opening area S of the tower opening 20 opened on the surface of the tower 2 can be secured. Thus, a larger opening area for ventilation can be secured while maintaining the tower strength.
The present invention is not limited to the aforementioned embodiments. For example, the embodiments and the modification in which the recessed cylindrical portion is illustrated may be applied to a projecting cylindrical portion. Many changes and variations are possible without departing from the spirit of the present invention.

### {Reference Signs List}

- 1: wind turbine generator
- 2: wind turbine tower
- 2a: partition member
- 3: nacelle
- 4: rotor head
- 5: wind turbine blades
- 6: door
- 10: door opening
- 20, 20A to 20C: tower opening
- 21, 21', 21A, 21B: cylindrical portion
- 22, 22A, 22B: outer case
- 23, 23A, 23B: stepped outer case
- 30: fan
- 40: bypass flow path
- 41: bypass outlet
- 42: sound absorbing material
- 50: heat exchanger

## Claims

1. A wind turbine generator that generates electric power by a generating machine driven by a rotor head rotating when receiving wind power using wind turbine blades, the generating machine being provided inside a nacelle, the nacelle being provided on an upper end portion of a tower standing upright on a foundation, the wind turbine generator cooling an inner space by introducing outer air into an inside of the tower from a tower opening provided on a surface of the tower, the wind turbine generator comprising:
a recessed portion extending from the tower opening toward an inner side of the tower or a projecting portion extending from the tower opening toward an outer side of the tower, wherein
air is passable through pressure loss elements provided on a part or all of a surface making up the recessed portion or the projecting portion, and
an effective opening area where the pressure loss elements are provided is larger than an actual opening area of the tower opening.

2. The wind turbine generator according to claim 1, wherein the tower opening is provided on at least a part of a door opening of a door for going in and out of the tower.

3. The wind turbine generator according to claim 1 or 2, wherein the recessed portion or the projecting portion includes an openable and closable port provided at any position of a component surface thereof.

4. The wind turbine generator according to any one of claims 1 to 3, wherein the recessed portion or the projecting portion is gradually widened from the tower opening.

5. The wind turbine generator according to any one of claims 1 to 4, wherein the recessed portion is inclined upward from the tower opening toward a tower axial center direction.

6. The wind turbine generator according to claim 1, wherein a cross-sectional shape of the recessed portion or the projecting portion includes a straight portion.

7. The wind turbine generator according to claim 2, wherein the projecting portion is an outer case projecting from a periphery of the door opening and the effective opening area is provided on an exposed surface of the outer case.

8. The wind turbine generator according to claim 2, wherein the recessed portion or the projecting portion is a stepped outer case projecting from a lower end portion side of the door opening, the lower end portion side of the door opening is the actual opening area, and the effective opening area is provided on all or a part of a surface making up the stepped outer case.

9. The wind turbine generator according to claim 7 or 8, wherein a space is formed between a bottom surface of the outer case or the stepped outer case and a ground surface, and the effective opening area is provided on the bottom surface.

10. The wind turbine generator according to any one of claims 7 to 9, wherein a device installation space including an independent outer air circulation path is formed inside of the outer case or the stepped outer case.

11. The wind turbine generator according to any one of claims 1 to 10, wherein a filter of a low pressure loss is attached to the effective opening area.

12. The wind turbine generator according to any one of claims 1 to 11, wherein a fan for sucking the outer air is provided in a partition disposed in the tower on a downstream side of the effective opening area.

13. The wind turbine generator according to any one of claims 1 to 11, wherein a fan for sucking the outer air is provided on an inner side of a surface forming the effective opening area.

14. The wind turbine generator according to any one of claims 1 to 12, wherein a bypass flow path is provided to be branched from a surface of the effective opening area and communicated with the air, and a heat exchanger for cooling a cooling medium by heat exchange with the outer air is provided in the bypass flow path.

15. The wind turbine generator according to claim 14, wherein a sound absorbing material is attached in the bypass flow path.

16. The wind turbine generator according to claim 14 or 15, wherein an outlet side of the bypass flow path extends to be opened toward a ground surface.
